# EUROPÄISCHE PATENTSCHRIFT

(11) **EP 2 934 975 B1**
(45) Veröffentlichungstag und Bekanntmachung des Hinweises auf die Patenterteilung: **22.03.2017**
(21) Anmeldenummer: 14700825.4
(22) Anmeldetag: 08.01.2014
(51) Int. Cl.: B60T 17/16, B61H 5/00, F16D 55/224, B61H 15/00, F16D 65/52

(54) **BREMSEINHEIT FÜR EIN FAHRZEUG UND FAHRZEUG MIT EINER DERARTIGEN BREMSEINHEIT**
BRAKE UNIT FOR A VEHICLE AND VEHICLE HAVING SUCH A BRAKE UNIT
UNITÉ DE FREINAGE DESTINÉE À UN VÉHICULE ET VÉHICULE MUNI DE LADITE UNITÉ DE FREINAGE

(30) Priorität: 31.01.2013 DE 102013201635
(43) Veröffentlichungstag der Anmeldung: 28.10.2015
(73) Patentinhaber: Siemens Aktiengesellschaft, 80333 München (DE)
(72) Erfinder: BILDSTEIN, Markus, 87534 Oberstaufen (DE); GAILE, Anton, 88299 Leutkirch (DE); SCHIFFERS, Toni, 41812 Erkelenz (DE)
(86) Internationale Anmeldenummer: PCT/EP2014/050232
(87) Internationale Veröffentlichungsnummer: WO 2014/117969

(56) Entgegenhaltungen:
- DE-A1-102006 007 684
- US-A- 4 319 671

## Beschreibung

Die Erfindung betrifft eine Bremseinheit für ein Fahrzeug, insbesondere eine Schienenfahrzeug, mit einem Bremszylinder, einem in dem Bremszylinder axial geführten Bremskolben und Mitteln zum Einstellen eines Lüftspiels, die zwei einander zugeordnete erste Anschläge bilden, die beim Öffnen der Bremseinheit aneinander anschlagen, wobei einer der ersten Anschläge an einem mit dem Bremskolben wirkverbundenen Sperrelement ausgebildet ist.

Eine derartige Bremseinheit ist beispielsweise aus der Druckschrift US 4,319,671 A bekannt, bei der als Sperrelement ein Kolben dient, der über die Hydraulikflüssigkeit mit dem Bremskolben wirkverbunden ist und der beim Öffnen der Bremseinheit an einer Kante eines Teilgehäuses des Bremszylinders anschlägt.

Zu Wartungszwecken, beispielsweise zum Wechsel verschlissener Bremsbeläge, ist es wünschenswert, die Bremseinheit über das Lüftspiel öffnen zu können.

Aufgabe der Erfindung ist es, ein derartiges Öffnen der Bremseinheit auf einfache und zeitsparende Weise zu ermöglichen.

Die Erfindung löst diese Aufgabe ausgehend von einer Bremseinheit mit den Merkmalen des Oberbegriffes des Patentanspruches 1 dadurch, dass ein Sperrglied unter der Kraft einer Vorspannfeder derart mit dem Sperrelement in Eingriff steht, dass das Sperrelement beim Anschlagen der ersten Anschläge durch das Sperrglied blockiert ist, und dass Betätigungsmitteln geeignet ausgebildet sind, das in Eingriff mit dem Sperrelement stehende Sperrglied entgegen der Kraft der Vorspannfeder in eine von dem Sperrelement gelöste Stellung zu verschieben. Durch das Lösen des Eingriffs kann der Bremskolben weit über das Lüftspiel hinaus verschoben werden, so dass die erfindungsgemäße Bremseinheit besonders wartungsfreundlich ist. Dabei erfordert das komplette Öffnen der Bremseinheit nur sehr einfache Bedienhandlungen. Aus dem einfachen Aufbau der Bremseinheit resultiert außerdem eine Gewichts- und Kostenreduzierung.

Vorzugsweise sind die Betätigungsmittel mechanisch, so dass die Bremseinheit für Wartungsarbeiten ohne Aufwand manuell geöffnet werden kann.

In konstruktiv einfach umsetzbarer Weise kann das Sperrelement ein Sperrschieber sein, der einen am Bremskolben ausgebildeten Mitnehmer übergreift, und das Sperrglied kann eine Sperrklinke sein, die unter der Kraft der Vorspannfeder in eine Verzahnung des Sperrschiebers eingreift.

Alternativ hierzu kann das Sperrelement ein Sperrrad sein und das Sperrglied kann eine Gewindespindel sein, die über einen Gewindetrieb mit dem Bremskolben gekoppelt und über ein Lager am Bremszylinder abgestützt ist.

Dabei ist die Gewindespindel vorzugsweise eine konzentrisch in den Bremskolben eingeschraubte nichtselbsthemmende Gewindespindel.

Außerdem weisen dabei die Betätigungsmittel vorzugsweise einen Zuganker, eine Zugankerschraube sowie einen durch Drehen der Zugankerschraube über eine Führung im Zuganker axial verschiebbaren Stift auf, wobei die Vorspannfeder am Zuganker abgestützt ist und wobei die Gewindespindel in die Bewegungsbahn des Stiftes ragende Betätigungsflächen bildet, die derart ausgebildet sind, dass die Gewindespindel beim Verschieben des Stiftes entgegen der Kraft der Vorspannfeder in die vom Sperrelement gelöste Stellung verschoben wird.

Durch eine kurze Drehung des Zugankers kann also eine axiale Verschiebung der nicht hemmenden Gewindespindel gegen die Vorspannfeder hervorgerufen und so der Verzahnungseingriff zwischen dem Sperrrad (Sperrelement) und der Gewindespindel gelöst und der Bremskolben - beispielsweise unter der Federkraft von Rückstellfedern - komplett zurück gefahren werden. Dabei kann die Zugankerschraube über eine Schnittstelle mit einem Werkzeug koppelbar sein, das die Verdrehung der Zugankerschraube von einer gut zugänglichen Stelle aus ermöglicht. Vorteilhaft ist hierbei außerdem, dass sich die mechanischen Komponenten, die am Einstellen des Lüftspiels und an der Rückstellung des Bremskolbens zum kompletten Öffnen der Bremseinheit beteiligt sind, im Hydraulikbereich befinden, so dass das Risiko eines Klemmens dieser Komponenten sowie der Verschleiß dieser Komponenten erheblich gemindert ist.

Es wird als vorteilhaft angesehen, wenn das Sperrelement und das Sperrglied für den Eingriff einander zugeordnete Verzahnungen aufweisen. Die Verbindung Sperrelement zu Sperrglied kann anstelle des Verzahnungseingriffs auch als reibschlüssige Verbindung ausgeführt sein.

Ferner wird es als vorteilhaft angesehen, wenn eine Arretierungsklinke geeignet ausgebildet ist, das Sperrelement bei geschlossener Stellung der Bremseinheit zu blockieren. Bei einer derartigen Blockierung des Sperrelementes wirkt die Bremseinheit als Parkbremse (Festhaltebremse).

Darüber hinaus wird es als vorteilhaft angesehen, wenn die Mittel zum Einstellen des Lüftspiels zwei einander zugeordnete zweite Anschläge bilden, die beim Schließen der Bremseinheit aneinander anschlagen, wobei einer der zweiten Anschläge an dem Sperrelement ausgebildet ist, mit dem unter der Kraft der Vorspannfeder das Sperrglied derart in Eingriff steht, dass das Sperrelement beim Anschlagen der zweiten Anschläge gegenüber dem Sperrglied unter der Kraft des Bremskolbens weiter rasten oder weiter rutschen kann und somit bei einem Verschleiß der Reibpartner das Luftspiel automatisch nachgestellt wird.

Die Erfindung betrifft auch ein Fahrzeug, insbesondere Schienenfahrzeug, mit einem Fahrwerk, an dem eine erfindungsgemäße Bremseinheit zum Reibschluss mit Bremsmitteln eines Radsatzes des Fahrwerks befestigt ist.

Zur weiteren Erläuterung der Erfindung sind in der
- Figur 1: ein erfindungsgemäßes Fahrzeug in Form eines Schienenfahrzeugs, bei dem Radsätzen von Drehgestellen jeweils zumindest eine erfindungsgemäße Bremseinheit zugeordnet ist, in der
- Figur 2: eine erste Ausführungsform der erfindungsgemäßen Bremseinheit, in den
- Figuren 3: und 4 eine zweite Ausführungsform der erfindungsgemäßen Bremseinheit, in den
- Figuren 5: und 6 eine Bremskolbeneinrichtung der in den Figuren 3 und 4 gezeigten Bremseinheit in verschiedenen Schnittdarstellungen und in den
- Figuren 7: bis 12 Teile der in den Figuren 5 und 6 gezeigten Bremskolbeneinrichtung in verschiedenen Stellungen ihres Bewegungsablaufes gezeigt.

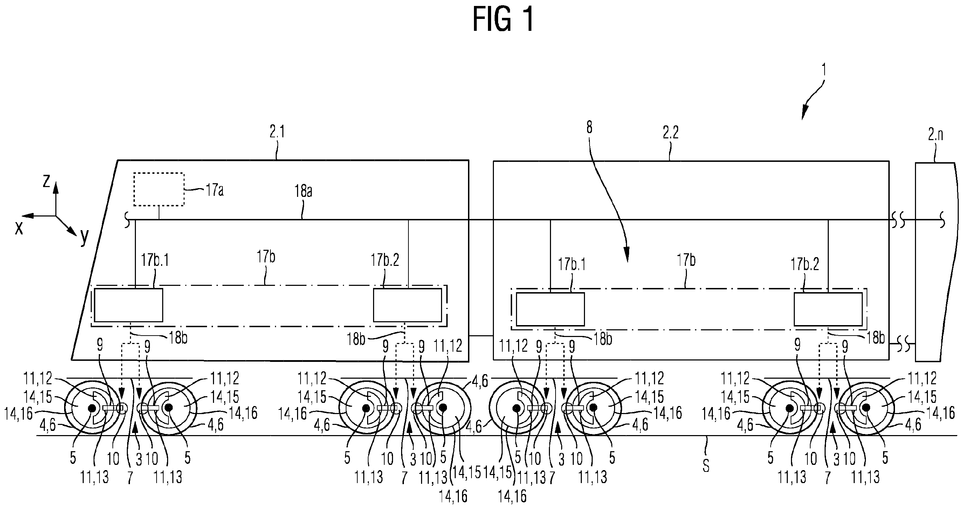

Gemäß Figur 1 verfügt das Schienenfahrzeug 1 über Wagen 2.1, 2.2, ..., 2.n, deren Wagenkästen in hier nicht gezeigter Weise jeweils über eine Sekundärfederung von zwei Fahrwerken in Form von Drehgestellen 3 getragen sind. Die Drehgestelle 3 weisen jeweils zwei Radsätze 4 auf. Die Radsätze 4 weisen jeweils eine Welle 5 auf, an deren Enden Räder 6 gehalten sind. Dabei sind die Wellen 5 der Radsätze 4 in hier nicht gezeigter Weise in Radsatzlagern drehbar gelagert, die über ein Gehäuse und eine Primärfederung an einem Drehgestellrahmen 7 des jeweiligen Drehgestells 3 angebunden sind. Weiterhin verfügt das Schienenfahrzeug 1 über ein hier als Ganzes mit 8 bezeichnetes Bremssystem.

Jeder Welle 5 des Schienenfahrzeuges 1 ist üblicherweise jeweils mindestens eine erfindungsgemäße Bremseinheit 9 zugeordnet. Somit verfügt jeder der Wagen 2.1, 2.2, ..., 2.n über mindestens vier dieser Bremseinheiten 9.

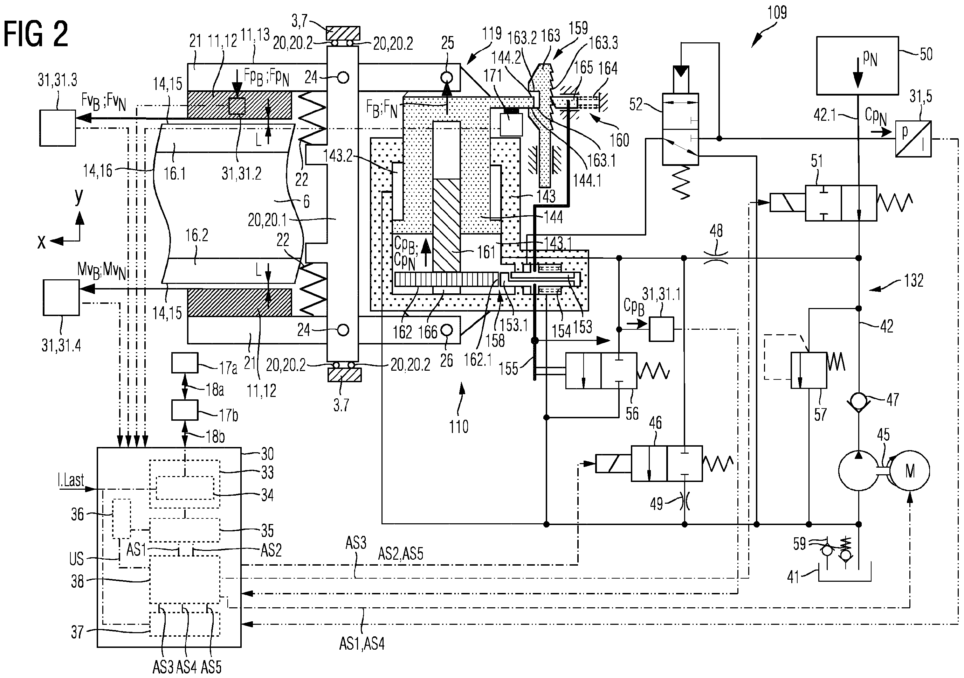

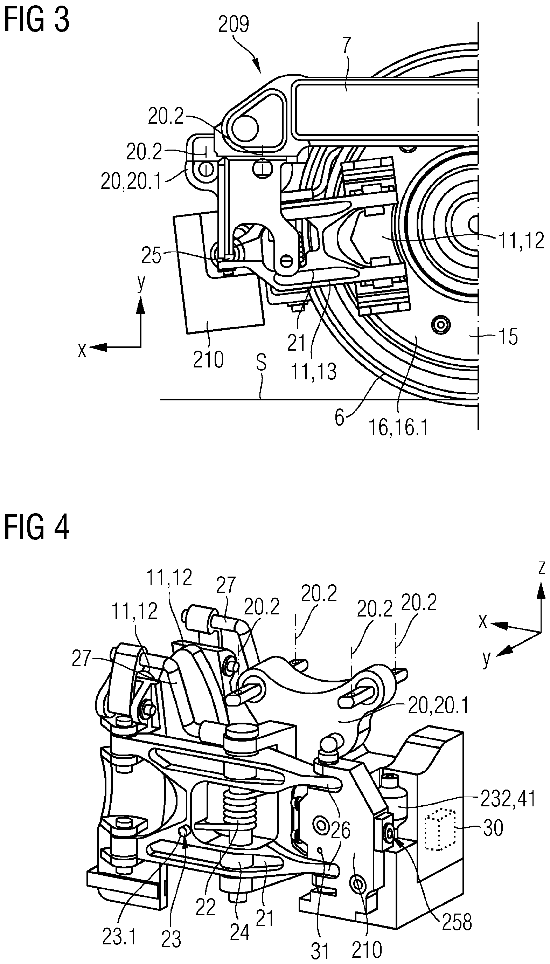

Jede der Bremseinheiten 9 weist einen Bremsaktor 10 und vom Bremsaktor 10 betätigte erste Bremsmittel 11 in Form einer mit Bremsbelägen 12 versehenen Zuspanneinrichtung 13 auf. Dabei wirken die ersten Bremsmittel 11 jeder dieser Bremseinheiten 9 jeweils mit zweiten Bremsmitteln 14 in Form einer mit Bremsflächen 15 versehenen Bremsscheibe 16 zusammen. Die Bremsflächen 15 sind hier von zwei Teilbremsscheiben 16.1, 16.2 gebildet, die an den beiden Seiten eines der Bremseinheit 9 zugeordneten Rades 6 befestigt sind, so dass das mit den beiden Teilbremsscheiben 16.1, 16.2 versehene Rad 6 die Bremsscheibe 16 in Form einer Radbremsscheibe bildet (siehe Figuren 2 und 3).

Anstelle der Radbremsscheibe könnte aber auch eine Wellenbremsscheibe vorgesehen sein, bei der dann eine neben dem Rad drehfest auf der Welle 5 angeordnete separate Scheibe mit Bremsflächen versehen wäre. Weiterhin könnten die ersten Bremsmittel auch mit einem zweiten Bremsmittel in Form des Rades oder in Form einer Bremstrommel zusammen wirken.

Die mit den Bremsbelägen 12 versehene Zuspanneinrichtung 13 ist unter der Einwirkung des Bremsaktors 10 zur Herstellung eines Reibschlusses zwischen den ersten Bremsmitteln 11 und den zweiten Bremsmitteln 14 über der Bremsscheibe 16 zuspannbar.

Der Bremsaktor 10 ist ein elektro-hydraulischer Bremsaktor.

Das Bremssystem 8 weist ein zentrales Steuergerät 17a sowie in jedem der Wagen 2.1, 2.2, ..., 2.n eine Bremssteuerung 17b auf, die von ein oder zwei Bremssteuergeräten 17b.1 und 17b.2 gebildet ist. Dabei sind die Bremssteuergeräte 17b.1 und 17b.2 über einen Zugbus 18a von dem zentralen Steuergerät 17a des Bremssystems 8, das beispielsweise von einer zentralen Fahrzeugsteuerung gebildet ist, ansteuerbar.

Über die Bremssteuerung 17b erhalten die Bremsaktoren 10 der Bremseinheiten 9 oder Gruppen der Bremsaktoren jeweils einen Bremsbefehl. Dabei können die Bremsbefehle über eine oder mehrere Steuerleitungen 18b und/oder BUS und/oder über Funk an die Bremsaktoren 10 übertragen werden.

Die Figur 2 zeigt schematisch eine erste Ausführungsform 109 der erfindungsgemäßen Bremseinheit mit einer ersten Ausführungsform 110 des Bremsaktors.

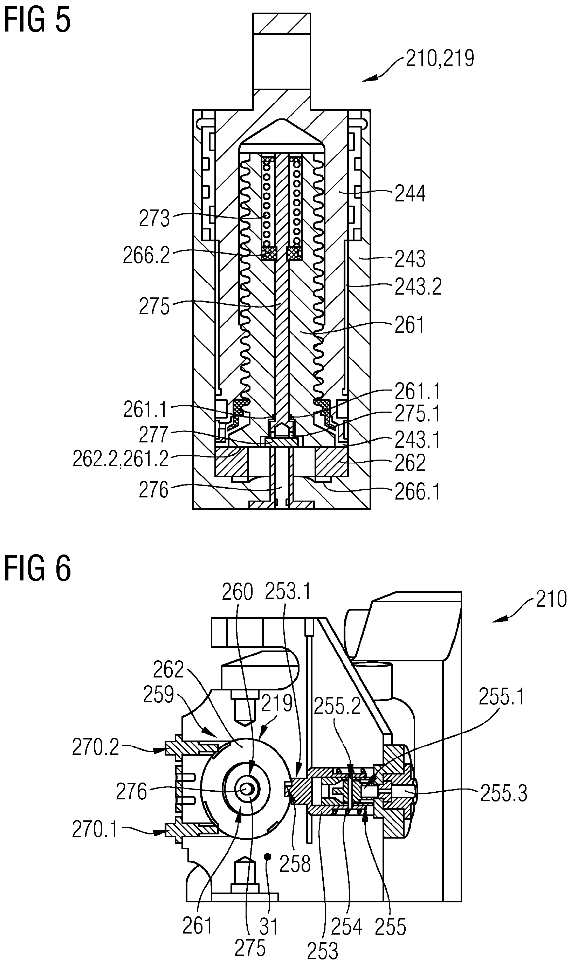

Die Figuren 3 und 4 zeigen eine zweite Ausführungsform 209 der erfindungsgemäßen Bremseinheit mit einer zweiten Ausführungsform 210 des Bremsaktors und die Figuren 5 bis 12 zeigen Details dieser zweiten Ausführungsform 210 des Bremsaktors.

Die beiden Ausführungsformen 109 und 209 der Bremseinheit unterscheiden sich jedoch im Wesentlichen nur in der konstruktiven Ausgestaltung einer als Ganzes mit 119 bzw. 219 bezeichneten Bremskolbeneinrichtung ihrer Bremsaktoren 110 bzw. 210 so dass die Bauteile der beiden Ausführungsformen 109 und 209 der Bremseinheit, die im Wesentlichen gleich ausgebildet sind, in den Figuren 2 bzw. 3 bis 12 jeweils mit den gleichen Bezugszeichen bezeichnet sind.

Beide Ausführungsformen 109 und 209 der Bremseinheit 9 weisen zu ihrer Befestigung (Aufhängung) an dem Drehgestellrahmen 7 ein als Ganzes mit 20 bezeichnetes Verbindungsteil auf, an dem die Zuspanneinrichtung 13 gehalten ist. Das Verbindungsteil 20 umfasst eine Bremsbrücke 20.1 und ist über Schraubverbindungen 20.2 an dem Drehgestellrahmen 7 fest positioniert. Die Bremseinheiten 109; 209 können aber auch an einer anderen Stelle am Fahrwerk befestigt sein, beispielsweise an einem Getriebegehäuse oder einem Radsatzflansch des Drehgestells.

Die Zuspanneinrichtung 13 ist mittels zweier Bremshebel 21 als Bremszange ausgebildet. Die Zuspanneinrichtung könnte aber alternativ auch als Bremssattel ausgebildet werden.

Während der Erstmontage der Bremseinheit 109; 209 am Drehgestellrahmen 7 ist mittels der Schraubverbindungen 20.2 eine Justierung der Position der Bremseinheit 109; 209 am Drehgestellrahmen 7 möglich, eine nachträgliche Justierung ist jedoch recht aufwändig.

Hervorgerufen durch ungleichmäßigen Verschleiß der Bremsbeläge 12 und der Bremsflächen 15 der Bremsscheibe 16, durch Relativbewegung des Drehgestelles 3 oder auch durch Schwergängigkeit der Zuspanneinrichtung 13, kann es im Betriebseinsatz nach der Erstmontage der Bremseinheit 109; 209 trotzdem dazu kommen kann, dass nur einer der Bremsbeläge 12 an der ihm zugeordneten Bremsfläche 15 der Bremsscheibe 16 anliegt bzw. ein Lüftspiel L der beiden Bremsbeläge 12 zu den Bremsflächen 15 unterschiedlich groß wird. Es kann also im Betriebseinsatz zu einem einseitigen Anliegen der Bremsmittel 11, 14 kommen.

Daher ist jedem der beiden Bremshebel 21 jeweils ein Federelement 22 zugeordnet. Die Federelemente 22 stützen sich jeweils mit einem ersten Ende an dem zugeordneten Bremshebel 21 und mit einem zweiten Ende an der Bremsbrücke 20.1 des Verbindungsteils 20 ab.

Die Spannkraft jedes der beiden Federelemente 22 ist einstellbar. Gezeigt ist dies hier allerdings nur bei der zweiten Ausführungsform 209 der Bremseinheit. Gemäß den Figuren 3 und 4 erfolgt hier das Einstellen der Spannkraft jedes der Federelemente 22 jeweils mittels einer als Ganzes mit 23 bezeichneten Einstelleinrichtung.

Die Einstelleinrichtungen 23 umfassen jeweils eine Einstellschraube 23.1 (auch als "Verstellschraube" oder "Anschlagschraube" bezeichnet) eine Gewindebohrung des zugeordneten Bremshebels 20 zum Eingriff der Einstellschraube 23.1 und einen in dem jeweiligen Bremshebel ausgebildeten Führungsschlitz zum Führen des am Bremshebel abgestützten Endes des Federelementes, das als hebelartiger Schenkel ausgebildet ist.

Das Einstellen der Spannkräfte der Federelemente 22 bietet die Möglichkeit, im Betriebseinsatz auf einseitiges Anliegen der Bremsmittel 11, 14 schnell und einfach reagieren zu können. Es kann also beispielsweise ein Relativversatz der Befestigung der Bremseinheit 109; 209 in Querrichtung y relativ zu den Bremsflächen 15 der Bremsscheibe 16 ausgeglichen und damit die Bremseinheit 109; 209 relativ zur Bremsscheibe 16 zentriert werden.

Zur Bildung der Bremszange sind die beiden Bremshebel 21 jeweils mittels Verbindungsbolzen 24 gelenkig mit dem Verbindungsteil 20 verbunden.

Erste Hebelarme der Bremshebel 21 sind gelenkig mit Aufnahmen 25,26 des Bremsaktors 110; 210 verbunden. Über eine Hubbewegung der Aufnahme 25 werden die Aufnahmen 25, 26 auseinander getrieben und damit die ersten Hebelarme auseinander gespreizt. An zweiten Hebelarmen der Bremshebel 21 sind die Bremsbeläge 12 angeordnet, die beim Auseinanderspreizen der ersten Hebelarme über der Bremsscheibe 16 zugespannt werden.

Neben der Funktion, das Luftspiel L der Bremsbeläge 12 beidseitig der Bremsscheibe 16 gleich zu gestalten (Zentrierfunktion), erfüllen die Federelemente 22 auch eine Rückstellfunktion. Die Rückstellfunktion besteht darin, die Bremszange zu öffnen, wenn der Bremsaktor 110; 210 keine Betätigungskraft zum Zuspannen der Zuspanneinrichtung 13 in die Zuspanneinrichtung einleitet.

Die zweite Ausführungsform 209 der erfindungsgemäßen Bremseinheit ist auch mit einer als Ganzes mit 27 bezeichneten Einrichtung zur Parallelführung der Bremsbeläge ausgerüstet, deren Details hier jedoch nicht weiter beschrieben sind.

Die beiden Ausführungsformen 110 und 210 des Bremsaktors umfassen jeweils eine lokale Elektronik 30, eine Sensoreinrichtung 31 und eine elektro-hydraulische Sollwert-Kraft-Umsetzungseinrichtung 132; 232, wobei der Bremsaktor 110; 210 mit seinen Bestandteilen 30, 31 und 132; 232 und die ersten Bremsmittel 11 mittels des Verbindungsteils 20 zu einer Baueinheit verbunden sind.

Wesentliche Details der lokalen Elektronik 30, der Sensoreinrichtung 31 und der elektro-hydraulische Sollwert-Kraft-Umsetzungseinrichtung 132; 232 sind im Folgenden anhand der in Figur 2 gezeigten ersten Ausführungsform 110 des Bremsaktors näher beschrieben. Soweit entsprechende Teile der zweiten Ausführungsform des 210 des Bremsaktors in den Figuren 3 bis 6 gezeigt sind, sind diese entsprechend bezeichnet.

Die lokale Elektronik 30 bildet eine Sollwerterfassungseinheit 33, die mit einer Sollwertkorrektureinrichtung 34 versehen ist. Außerdem bildet die lokale Elektronik eine Sollwertregelungseinrichtung 35, eine Überwachungseinrichtung 36 eine Rückfalleinrichtung 37 und eine Umschalteinrichtung 38.

In Abhängigkeit des Bremsbefehls fordert die Sollwerterfassungseinheit 33 von zumindest einem der Bremssteuergeräte 17a.1 oder 17b.2 der Bremssteuerung 17b einen Bremssollwert an. Mittels der Sollwertkorrektureinrichtung 34 erfolgt in Abhängigkeit eines Reduziersignals einer hier nicht gezeigten Gleitschutzeinrichtung eine Gleitschutzkorrektur und in Abhängigkeit eines Lastistwertes I.Last eine Lastkorrektur des Bremssollwertes, wobei der derart korrigierte Bremssollwert als Sollwert S.Cp_{B}; S.Fp_{B} einer Anpressgröße Cp_{B}; Fp_{B} oder als Sollwert S.Fv_{B}; S.Mv_{B} einer Verzögerungsgröße Fv_{B}; Mv_{B} an die Sollwertregelungseinrichtung 35 übermittelt wird.

Zur Bestimmung des Lastistwertes I.Last wird der Beladungszustand der Wagen 2.1, 2.2, ..., 2.n des Schienenfahrzeugs 1 an mindestens einer Position im Fahrzeug erfasst und einer zugeordneten der Bremseinheiten 109; 209 oder einer Gruppe der Bremseinheiten, z.B. einer Gruppe der Bremseinheiten in einem der Drehgestelle, sicher mitgeteilt.

Die elektro-hydraulische Sollwert-Kraft-Umsetzungseinrichtung 132; 232 umfasst einen Behälter 41 zum Bereitstellen von Hydraulikflüssigkeit, einen über ein Hydraulikleitungssystem 42 mit dem Behälter 41 verbundenen Bremszylinder 143; 243 mit Bremskolben 144; 244 sowie Steuermittel 45, 46. Die Steuermittel 45, 46 sind geeignet ausgebildet, unter der Einwirkung elektrischer Ausgangssignale AS1, AS2 der Sollwertregelungseinrichtung 35, die über die Umschalteinrichtung 38 ausgegeben werden, einen den Bremskolben 144; 244 beaufschlagenden Istwert I.Cp_{B} eines Hydraulikdruckes Cp_{B} in dem Bremszylinders 143; 243 einzustellen.

Ein aus der Beaufschlagung des Bremskolbens 144; 244 mit dem Hydraulikdruck Cp_{B} resultierender Istwert I.Fp_{B} einer Anpresskraft Fp_{B} wird durch Reibschluss der ersten Bremsmittel 11 mit den zweiten Bremsmitteln 14 in einen Istwert I.Fv_{B} einer Verzögerungskraft Fv_{B} bzw. einen Istwert I.Mv_{B} eines Verzögerungsmomentes Mv_{B} umgesetzt.

Eines der Steuermittel ist ein Pumpenaggregat 45, mittels dessen Hydraulikflüssigkeit aus dem Behälter 41 in den Bremszylinder 43 pumpbar ist. Ein weiteres der Steuermittel ist ein Bremsventil 46. Das Bremsventil 46 ist geeignet ausgebildet, Hydraulikflüssigkeit aus dem Bremszylinder 43 in den Behälter 41 abfließen zu lassen.

Die Sensoreinrichtung 31, die Bestandteil der Bremseinheit 109 bzw. 209 ist, ermittelt mittels eines ersten Sensors 31.1 (Druckaufnehmer) den Istwert I.Cp_{B} des Hydraulikdruckes oder mittels eines zweiten Sensors 31.2 den Istwert I.Fp_{B} der Anpresskraft als Istwert der Anpressgröße und/oder mittels eines dritten Sensors 31.3 den Istwert I.Fv_{B} der Verzögerungskraft oder mittels eines vierten Sensors 31.4 den Istwert I.Mv_{B} des Verzögerungsmomentes als Istwert der Verzögerungsgröße.

Die Sollwertregelungseinrichtung 35, die ebenfalls Bestandteil der Elektronik 30 der Bremseinheit 109 bzw. 209 ist, ist geeignet ausgebildet, zur Regelung der Verzögerungsgröße Fv_{B}; Mv_{B} die Ausgangssignale AS1, AS2 so auszugeben, dass der erfasste Istwert I.Fv_{B}; I.Mv_{B} der Verzögerungsgröße Fv_{B}; Mv_{B} dem Sollwert S.Fv_{B}; S.Mv_{B} der Verzögerungsgröße Fv_{B}; Mv_{B} entspricht, oder zur Regelung der Anpressgröße Cp_{B}; Fp_{B} die Ausgangssignale AS1, AS2 so einzugeben, dass der erfasste Istwert I.Cp_{B}; I.Fp_{B} der Anpressgröße Cp_{B}; Fp_{B} dem Sollwert S.Cp_{B}; S.Fp_{B} der Anpressgröße Cp_{B}; Fp_{B} entspricht.

Im Folgenden werden der Auf- und Abbau einer geregelten Bremskraft F_{B} und die Bereitstellung einer passiven lastkorrigierten Notbremskraft F_{N} des Bremskolbens 144; 244 im Detail näher beschrieben.

Die Bremsscheibe 16 wird durch Anpressen der Bremsbelägen 12 an die Bremsflächen 15 gebremst. Das Anpressen erfolgt unter der Einwirkung der geregelten Bremskraft F_{B} oder unter der Einwirkung der passiven lastkorrigierten Notbremskraft F_{N} des Bremskolbens 144; 244, welcher in dem Bremszylinder 143; 243 aufgenommen ist und unter der Einwirkung des im Bremszylinder 143; 243 geregelt aufgebauten Hydraulikdruckes Cp_{B} oder unter der Einwirkung eines auf den Bremszylinder gegebenen passiven lastkorrigierten Hydraulikdruckes Cp_{N} steht. Die geregelte Bremskraft F_{B} bzw. die Notbremskraft F_{N} des Bremskolbens 44 wird über die Zuspanneinrichtung 13 in die geregelte Anpresskraft Fp_{B} bzw. in die passive Anpresskraft Fp_{N} umgesetzt, also über die Zuspanneinrichtung 13 als Anpresskraft Fp_{B} bzw. Fp_{N} auf die Bremsbeläge 12 geleitet.

Der Aufbau der geregelten Bremskraft F_{B} erfolgt dabei über den geregelten Aufbau des Hydraulikdruckes Cp_{B} in einer Ausfahrkammer 143.1; 243.1 des Bremszylinders 43 durch das Pumpenaggregat 45. Hierzu pumpt das Pumpenaggregat 45 Hydraulikflüssigkeit in Form von Hydrauliköl vom Behälter 41 über ein Rückschlagventil 47 in die Ausfahrkammer 143.1; 243.1 des Bremszylinders 143; 243. Das Rückschlagventil 47 verhindert bei abgeschaltetem Pumpenaggregat 45 ein Zurückströmen von Hydrauliköl in den Behälter 41.

Der geregelte Abbau der Bremskraft F_{B} erfolgt über einen geregelten Abbau des Hydraulikdruckes Cp_{B} in der Ausfahrkammer 143.1; 243.1 des Bremszylinders durch das Bremsventil 46. Das Bremsventil 46 ist vorzugsweise ein diskret schaltendes Sitzventil, welches eine sehr geringe Leckage aufweist.

Hydraulische Drosseln 48 und 49 begrenzen die Geschwindigkeit des Aufbaus des Hydraulikdruckes in der Ausfahrkammer 143.1; 243.1 des Bremszylinder 143; 243 und des Abbaus des Hydraulikdruckes in der Ausfahrkammer 143.1; 243.1 des Bremszylinder 143; 243.

Da das Gewicht und damit die abzubremsende Masse des Schienenfahrzeugs 1 abhängig vom Beladungszustand variieren kann, könnte eine zu hoch angesetzte Notbremskraft F_{N} zu einem Überbremsen oder eine zu niedrig angesetzte Notbremskraft F_{N} zu einem Unterbremsen des Schienenfahrzeuges 1 führen. Das Überbremsen könnte zum Gleiten und zu Flachstellen an Rad 6 und Schiene S führen. Das Unterbremsen könnte zu unzulässig hohen Bremswegen führen.

Um dies zu vermeiden sind bei der erfindungsgemäßen Bremseinheit 9; 109; 209 Mittel zur Bereitstellung der Notbremskraft F_{N} als lastkorrigierte Notbremskraft vorgesehen. Dabei erfolgt das Einstellen dieser Notbremskraft - also die Anpassung dieser Notbremskraft an das aktuelle Gewicht des Fahrzeugs - innerhalb der zulässigen Grenzen (leer/beladen), wenn:
a) Das Fahrzeug steht oder/und
b) eine Türfreigabe zurück genommen worden ist und/oder die Türen geschlossen sind und/oder
c) ein Bremse gelöst Befehl ansteht und/oder
d) ein Fahrbefehl ansteht und/oder
e) die Geschwindigkeit des Fahrzeugs geringer als 10km/h ist.

Die Bereitstellung der lastkorrigierten Notbremskraft F_{N} erfolgt dadurch, dass der passive lastkorrigierte Hydraulikdruck Cp_{N} auf die Ausfahrkammer 143.1; 243.1 des Bremszylinders gegeben wird. Hierzu weist die Sollwert-Kraft-Umsetzungseinrichtung 132; 232 einen unter einem Vorspanndruck p_{N} an einem Anschlussabschnitt 42.1 das Hydraulikleitungssystem 42 angeschlossenen Druckgeber 50, und weitere Steuermittel 51 auf, wobei die weiteren Steuermittel 51 geeignet ausgebildet sind, unter der Einwirkung eines elektrischen Ausgangs Signals AS3 der Rückfalleinrichtung 37, das bei Eingang eines Umschaltsignals US der Überwachungseinrichtung über die Umschalteinrichtung 38 ausgegeben wird, den Druckgeber 50 derart freizugeben, dass der Istwert I.p_{N} des Vorspanndruckes p_{N} zur Beaufschlagung des Bremskolbens als Istwert I.Cp_{N} des Hydraulikdrucks Cp_{N} auf die Ausfahrkammer des Bremszylinders gegeben wird.

Der Druckgeber 50 ist ein Gasdruckspeicher oder alternativ ein Federspeicher.

Mittels der Rückfalleinrichtung 37 erfolgt in Abhängigkeit des Lastistwertes I.Last eine Lastkorrektur eines vorgegebenen Notbremssollwertes, wobei der derart lastkorrigierte Notbremssollwert als lastkorrigierter Sollwert S.p_{N} des Vorspanndruckes des Druckgebers 50 bereitgestellt wird.

Die Sollwert-Kraft-Umsetzungseinrichtung 132; 232 umfasst Lastkorrekturmittel, mittels derer zum Aufbau des passiven lastkorrigierten Vorspanndrucks p_{N} des Druckgebers 50 der Hydraulikdruckes Cp_{N} in dem Anschlussabschnitt 42.1 das Hydraulikleitungssystem in Abhängigkeit elektrischer Ausgangssignale AS4, AS5 der Rückfalleinrichtung auf den lastkorrigierten Sollwert S.Cp_{N} = S.p_{N} einstellbar ist.

Hier bilden die Steuermittel 45, 46 zugleich die Lastkorrekturmittel und sind geeignet ausgebildet, zum Vorspannen des Druckgebers 50 unter der Einwirkung der elektrischen Ausgangssignale AS4, AS5 der Rückfalleinrichtung 37, die über die Umschalteinrichtung 38 ausgegeben werden, den Istwert I.Cp_{N} des Hydraulikdruckes in dem Anschlussabschnitt 42.1 einzustellen, wobei mittels des Pumpenaggregates 45 Hydraulikflüssigkeit aus dem Behälter 41 in den Anschlussabschnitt 42.1 pumpbar ist, und wobei mittels des Bremsventils 46 Hydraulikflüssigkeit aus dem Anschlussabschnitt 42.1 in den Behälter 41 abfließen kann. Ein an den Anschlussabschnitt 42.1 angeschlossener fünfter Sensor in Form eines Druckaufnehmers ermittelt den Istwert I.Cp_{N} des Hydraulikdruckes in dem Anschlussabschnitt 42.1 und damit zugleich den Istwert I.p_{N} des Vorspanndruckes, wobei die Rückfalleinrichtung 37 geeignet ausgebildet ist, zur Regelung des Vorspanndruckes p_{N} des Druckgebers 50 die Ausgangssignale AS4, AS5 so auszugeben, dass der erfasste Istwert I.Cp_{N} = I.p_{N} dem lastkorrigierten Sollwert S.Cp_{N =} S.p_{N} entspricht.

Die weiteren Steuermittel 51 sind von einem Schnellbremsventil gebildet. Bei geöffnetem (entstromtem) Schnellbremsventil 51 wird der Druckgeber 50 gefüllt - der Vorspanndruck des Druckgebers wird also bei beladungsabhängigem zu niedrigem Vorspanndruckruck über das Pumpenaggregates 45 (Motor-Pumpeneinheit)angehoben und bei beladungsabhängigem zu hohem Vorspanndruck über das Bremsventil 46 kontrolliert abgesenkt. Bei gefülltem Druckgeber 50 wird das Schnellbremsventil 51 wieder geschlossen und bleibt im Normalbetrieb geschlossen.

Bei gefülltem Druckgeber 50 wird außerdem über ein hydraulisch betätigtes Ventil 52, welches vorzugsweise einstellbar ausgeführt ist, ein Sperrkolben 153; 253 gegen die Kraft einer Vorspannfeder 154; 254 zurückgehalten.

Auch durch eine mechanische Betätigung 155; 255 lässt sich der Sperrkolben zurückziehen und ein Druckablassventil 56 öffnen. Hierdurch wird ein manuelles Lösen der Bremseinheit 109; 209 möglich.

Der Sperrkolben 153; 253 könnte jedoch auch durch eine hydraulische Betätigung zurückgezogen werden.

Wenn im Betrieb von der Elektronik 30 erkannt wird, dass eine passive Bremsung über den Vorspanndruck p_{N} des Druckgebers 50 notwendig ist, wird durch die Ausgabe des Ausgangssignals A3 das Schnellbremsventil 51 geöffnet um so den Vorspanndruck p_{N} des Druckgebers 50 über den Hydraulikdruck Cp_{N} auf den Bremszylinder 143; 243 zu geben. Der fünfte Sensor 31.5 in Form des Druckaufnehmers misst fortlaufend den Istwert I.Cp_{N}=I.p_{N} und verwendet diesen insbesondere dazu, den Vorspanndruck p_{N} des Druckgebers 50 innerhalb vorgegebener Betriebsgrenzwerte zu halten und um die Verfügbarkeit dieses Vorspanndruckes p_{N} und damit die Verfügbarkeit der passiven Bremsung anzuzeigen. Falls der Vorspanndruck p_{N} des Druckgebers zu stark absinkt, wird ein Nachfüllen des Druckgebers 50 notwendig. Außerdem begrenzt ein Überdruckventil 57 den Hydraulikdruck Cp_{N} als passive Sicherheitseinrichtung.

Der Behälter 41 ist ein Öltank, der von der Umgebungsatmosphäre abgeschlossen ist um den Eintrag von Feuchtigkeit zu minimieren. Nur im Fall des Auftretens von Unterdruck im Öltank wird dieser Unterdruck über eine Ventilanordnung 59 ausgeglichen.

Die beiden Bremskolbeneinrichtungen 119; 219 weisen als Ganzes mit 158; 258 bezeichnete Arretierungsmittel auf, die in einer Sperrstellung geeignet ausgebildet sind, den Bremskolben für eine Parkbremsung mechanisch zu arretieren.

Ferner weisen die beiden Bremskolbeneinrichtungen 119; 219 Als Ganzes mit 159; 259 bezeichnete Mittel zum Voreinstellen des Lüftspiels L der ersten Bremsmittel 11 zu den zweiten Bremsmitteln 14 auf einen vorgegebenen Lüftspielwert S.L auf. Diese Mittel 159; 259 sind geeignet ausgebildet, bei einem Verschleiß der Bremsmittel 11, 14 das Lüftspiel L auf den vorgegebenen Lüftspielwert S.L automatisch nachzustellen.

Außerdem weisen die beiden Bremskolbeneinrichtungen 119; 219 Als Ganzes mit 160; 260 bezeichnete Rückstellmittel auf, mittels derer sich die Bremseinheit zum Beispiels für einen Wechsel der Bremsbeläge in einen vollständig offenen Zustand überführen lässt. Mit vollständig offen ist dabei ein Zustand gemeint, bei dem der Abstand der ersten Bremsmittel 11 zu den zweiten Bremsmittel 14 wesentlich größer als der vorgegebene Lüftspielwert S.L des Lüftspiels L ist.

Bei der in Figur 2 gezeigten ersten Ausführungsform 109 der erfindungsgemäßen Bremseinheit sind die Arretierungsmittel 158 zum mechanischen Arretieren des Bremskolbens von den Mitteln 159 zum Voreinstellen des Lüftspiels L und den Rückstellmitteln 160 räumlich getrennt.

Im Folgenden wird zunächst das mechanische Arretieren des Bremskolbens 144 und damit das dauerhafte mechanische Aufrechterhalten der Bremskraft F_{B} bzw. der Anpresskraft Fp_{B} - also eine Parkbremsfunktion - näher erläutert.

Infolge einer Leckage von hydraulischen Komponenten der elektro-hydraulischen Sollwert-Kraft-Umsetzungseinrichtung 132, welche mit dem Hydraulikdruck Cp_{B} beaufschlagt sind, kann der Hydraulikdruck Cp_{B} und somit letztendlich auch die Anpresskraft Fp_{B} über die Zeit abfallen. Um einen solchen Abbau der Anpresskraft Fp_{B} zu begrenzen, kann optional im Parkbremsfall die Bewegung des Bremskolbens 144 mechanisch arretiert werden. Dies wird mittels der Arretierungsmittel 158 erreicht.

Die Arretierungsmittel 158 umfassen hierzu eine nichtselbsthemmende Gewindespindel 161, welche konzentrisch in den Bremskolben 144 eingeschraubt ist und sich am Bremszylinder 143 abstützt. Ein Sperrrad 162, das mit der Gewindespindel 161 verbunden ist, wird bei der Sperrstellung des Sperrkolbens 153 in ihrer Drehung gehindert, da in der Sperrstellung eine Arretierungsklinke 153.1 des Sperrkolbens 153 in eine Sperrnut 162.1 des Sperrrades 162 eingreift, Dadurch wird eine Bewegung des Bremskolbens 144 verhindert und somit der gerade vorherrschende Istwert I.Fp_{B} zum Parken (Festhalten) des Schienenfahrzeugs 1 aufrechterhalten. Durch die mechanische Betätigung 155 lässt sich der Sperrkolben 153 aus seiner Sperrstellung in eine Gelöststellung zurückziehen und das Druckablassventil 56 öffnen. Hierdurch wird das manuelle Lösen der Bremseinheit 109 möglich.

Im Weiteren wird das Nachstellen des Lüftspiels L erläutert.

In einer gelösten Stellung der Bremseinheit, bei der die Kraft der Rückstellfedern 22 größer ist als die aus der Bremskraft F_{B} resultierende Anpresskraft Fp_{B}, liegt ein erster Anschlag 144.1 des Bremskolbens 144 unter der Kraft der Rückstellfedern 22 an einem zugeordneten ersten Anschlag 163.1 eines als Sperrschieber ausgebildeten Sperrelementes 163 an. Beim Aufbau des Hydraulikdruckes Cp_{B} bewegt sich der Bremskolben 144 durch ein Drehen der Gewindespindel 161 einen Stellweg, der dem vorgegebenen Lüftspielwert S.L entspricht, vom den ersten Anschlag 163.1 bis zu einem zweiten Anschlag 163.2 des Sperrschiebers. Bei nicht verschleißten Bremsmitteln 11, 14 schlägt der Bremskolben 144 bei einem vorgegebenen maximalen Wert der Bremskraft F_{B} mit einem zweiten Anschlag 144.2 an dem zweiten Anschlag 163.2 an. Wird jedoch durch Verschleiß der Bremsmittel 11, 12 der zweite Anschlag 163.2 erreicht, bevor der maximale Wert der Bremskraft F_{B} wirkt, so führt ein weiterer Aufbau des Hydraulikdruckes Cp_{B} dazu, dass sich der Bremskolben 144 unter Mitnahme des Sperrschiebers 163, an dem die beiden Anschläge 163.1 und 163.2 ausgebildet sind, einen Nachstellweg weiter bewegt. Es erfolgt also ein Nachstellen des Bremskolbens 144.

Der Sperrschieber 163 ist mit einer feinen Verzahnung 163.3 versehen, in die unter der Kraft einer Vorspannfeder 164 ein als Sperrklinke ausgebildetes Sperrglied 165 eingreift, so dass der um den Nachstellweg verschobene Sperrschieber 163 zum Ende des Nachstellens wieder arretiert ist.

Beim Abbau des Hydraulikdruckes Cp_{B} fährt der Bremskolben 144 nicht den Nachstellweg sondern nur den Stellweg vom zweiten Anschlag 163.2 zum ersten Anschlag 163.1 zurück und erzeugt somit wieder den vorgegebenen Lüftspielwert S.L des Lüftspiels L.

Im Folgenden wird das Rückstellen des Bremskolbens 144 näher erläutert. Die Sperrklinke 165 bildet das Sperrglied, das mittels der Vorspannfeder 164 in einer mit dem Sperrschieber 163 in Eingriff stehenden Stellung gehalten ist, wobei der Sperrschieber 163 das Öffnen der Bremse auf den vorgegebenen Lüftspielwert begrenzt, da die ersten Anschläge 144.1 und 163.1 aneinander anschlagen. Die mechanische Betätigung 155, die zugleich als ein Betätigungsmittel zum Betätigen des Sperrgliedes 165 dient, ist geeignet ausgebildet, das Sperrglied 165 entgegen der Kraft der Vorspannfeder 164 in eine vom Sperrschieber 144 gelöste Stellung zu verschieben.

Bei der in den Figuren 3 bis 12 gezeigten zweiten Ausführungsform 209 der erfindungsgemäßen Bremseinheit, sind die Arretierungsmittel 258 zum mechanischen Arretieren des Bremskolbens 244, die Mittel 259 zum Voreinstellen des Lüftspiels L und die Rückstellmittel 260 räumlich nicht voneinander getrennt.

Auch hier kann mittels der Arretierungsmittel 258 in einem Parkbremsfall die Bewegung des Bremskolbens 244 mechanisch arretiert werden.

Die Arretierungsmittel 258 umfassen hierzu wieder eine nichtselbsthemmende Gewindespindel 261, welche konzentrisch in den Bremskolben 244 eingeschraubt ist und sich am Bremszylinder 243 abstützt. Ein Sperrrad 262, das über eine Verzahnung 262.2, hier Stirnverzahnung, mit einer Verzahnung 261.2 der Gewindespindel 261 verbunden ist, wird durch die Arretierungsklinke 253.1 des Sperrkolbens 253 in ihrer Drehung gehindert. Dadurch wird eine Bewegung des Bremskolbens 244 verhindert und somit die Bremskraft F_{B} aufrechterhalten. Durch die mechanische Betätigung 255 lässt sich der Sperrkolben 253 zurückziehen und das Druckablassventil 56 öffnen. Hierdurch wird ein manuelles Lösen der Bremseinheit 209 möglich. Die mechanischen Betätigung 255 umfasst einen Zugkolben 255.1 mit einem Querstift 255.2, der in den Sperrkolben 253 eingreift sowie Führung 255.3 für den Zugkolben.

Im Weiteren wird das Nachstellen des Lüftspiels näher erläutert.

In einer gelösten Stellung der Bremseinheit 209, bei der die Kraft der Rückstellfedern 22 größer ist als die aus der Bremskraft F_{B} resultierende Anpresskraft Fp_{B}, liegt das Sperrrad 262 unter der Kraft der Rückstellfedern 22 mit einem ersten Anschlag 262.3 an einem zugeordneten ersten Anschlag 270.1 an, der am Bremszylinder abgestützt ist. Beim Aufbau des Hydraulikdruckes Cp_{B} bewegt sich der Bremskolben 244 durch ein Drehen der Gewindespindel 261 einen Stellweg, bis das Sperrrad mit einer zweiten Anschlag262.4 an einem zugeordneten zweiten Anschlag 270.2 anschlägt, der ebenfalls am Bremszylinder abgestützt ist.

Bei nicht verschleißten Bremsmitteln 11, 14 schlägt das Sperrrad 262 beim Schließen der Bremseinheit bei einem vorgegebenen maximalen Wert der Bremskraft F_{B} an dem zweiten Anschlag 270.2 an. Wird jedoch durch Verschleiß der Bremsmittel 11, 12 der zweite Anschlag 270.2 erreicht, bevor der maximale Wert der Bremskraft F_{B} wirkt, so führt ein weiterer Aufbau des Hydraulikdruckes Cp_{B} zu einer Verdrehung zwischen Sperrrad 262 und Gewindespindel 261, die über die feinen Verzahnungen 262.2 und 261. 2verbunden sind. Beim Abbau des Hydraulikdruckes Cp_{B} fährt der Bremskolben 244 wieder den Stellweg ohne den Nachstellweg zurück, bis das Sperrrad an dem ersten Anschlag 270.1 anschlägt, und erzeugt somit wieder das vorgegebene Lüftspiel L. Die beiden Anschläge 270.1 und 270.2 sind einstellbar ausgeführt. Anstelle der Verbindung über die Verzahnungen 262.2 und 261.2 kann auch eine reibschlüssige Verbindung zwischen dem Sperrrad und der Gewindespindel, z.B. über einen Konus, gewählt werden.

Zum vollständigen Öffnen der Bremseinheit 209 dienen wieder die Rückstellmittel 260. Zu diesen Rückstellmitteln gehören wieder Betätigungsmittel 275, 276, 277 wobei hier - mittels der Vorspannfeder 273 die Gewindespindel 261 als Sperrglied in einer mit dem Sperrelement 262 in Eingriff stehenden Stellung gehalten ist und die Betätigungsmittel 275, 276, 277 geeignet ausgebildet sind, die Gewindespindel 261 entgegen der Kraft der Vorspannfeder 273 in eine vom Sperrelement 262 gelöste Stellung zu verschieben.

Die Betätigungsmittel 275, 276, 277 weisen einen Zuganker 275, eine Zugankerschraube 276 sowie einen durch Drehen der Zugankerschraube 276 über eine Führung 275.1 im Zuganker axial verschiebbaren Stift 277 auf, wobei die Vorspannfeder 273 am Zuganker 275 abgestützt ist und wobei die Gewindespindel 261 in die Bewegungsbahn des Stiftes 277 ragende Betätigungsflächen 261.1 bildet, die derart ausgebildet sind, dass die Gewindespindel 261 beim Verschieben des Stiftes 277 entgegen der Kraft der Vorspannfeder 273 in die vom Sperrelement 262 gelöste Stellung verschoben wird.

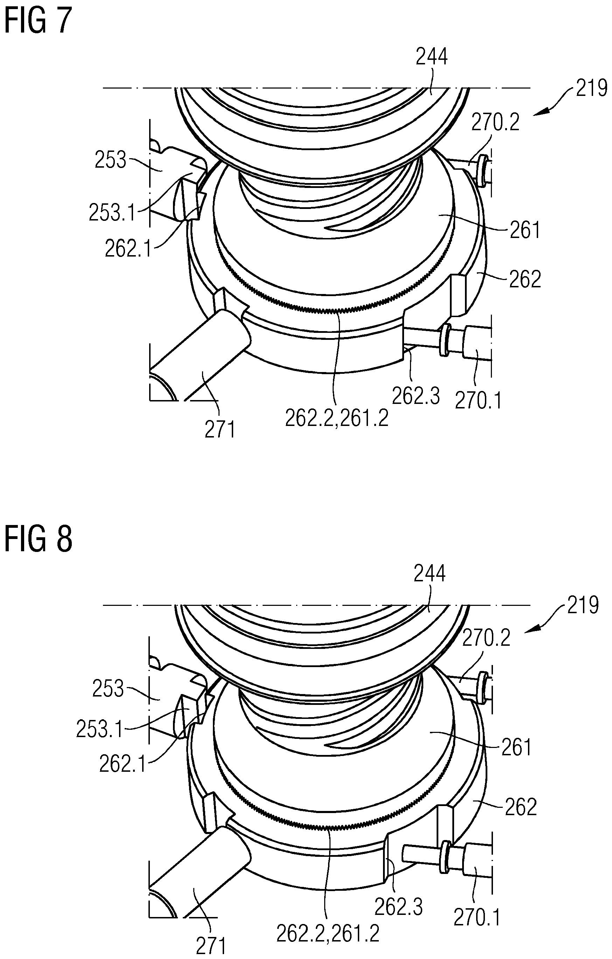

Im Folgenden wird das Einlegen der Parkbremsung mit gleichzeitigem Nachstellen des Lüftspiels L anhand der Figuren 7 bis 12 noch einmal näher erläutert.

Fig. 7 zeigt einen Anfangszustand, bei dem die Bremseinheit 209 bei maximalem Lüftspiel geöffnet ist.

Auf den Bremskolben 244 wirkt eine konstante, bremsenöffnende hydraulische Kraft Cp_{B}, da eine Einfahrkammer 243.2 (vgl. Figur 5) aus dem Speicher 41 permanent druckbeaufschlagt wird. Der Bremskolben 244 wird in der Stellung blockiert, die dem maximalen Lüftspiel entspricht. Die Bremskolbenblockierung wird gemäß vorangegangener Beschreibung von der Gewindespindel 261 hervorgerufen, welche sich nicht drehen kann, da das Sperrrad 262 an dem ersten Anschlag 270.1 anschlägt. Das Drehmoment der Gewindespindel 261 wird über den Eingriff der einander zugeordneten Verzahnungen261.2, 262.2 auf das Sperrrad 262 übertragen. Der Eingriff der Verzahnungen kann nicht lösen, da die Gewindespindel 261 von der Kraft des Bremskolbens 244 axial belastet wird.

Ein Näherungsschalter 271 ist geöffnet, weil eine Anzeigenut 262.5 des Sperrrades in seinem Erkennungsbereich liegt. Die Arretierungsklinke 253.1 ist hydraulisch zurückgezogen.

Fig. 8 zeigt einen Zwischenzustand der Bremseinheit 209, bei dem das Lüftspiel L der Bremsbeläge überwunden wurde und die Bremsbeläge ohne Kraft an der Bremsscheibe anliegen.

Dieser Zustand wurde erreicht durch Erhöhung des Hydraulikdruckes Cp_{N} in der Ausfahrkammer 243.1 des Bremszylinders 243. Die Kraft der Rückstellfedern 22 wurde überwunden und der Bremskolben 244 bewegte sich in die dargestellte Position. Die Gewindespindel 261 drehte sich entsprechend, da einerseits der Bremskolben 244 nicht-drehbar gelagert ist und andererseits die Gewindespindel 261 derart gelagert ist, dass sie nur Drehbewegungen ausführen kann. Diese axiale Fixierung wird dadurch erreicht, dass die Gewindespindel von einer Vorspannfeder 272 (vgl. Figur 5) gegen ein Axial-Wälzlager 273.1, 273.2 gedrückt wird, welches sich wiederum am Gehäuse des Bremszylinders 243 abstützt. Diese Axialkraft verhindert auch ein Lösen der Stirnverzahnung. Der Näherungsschalter 271 ist geschlossen, da die Anzeigenut 262.5 außerhalb seines Erkennungsbereichs liegt.

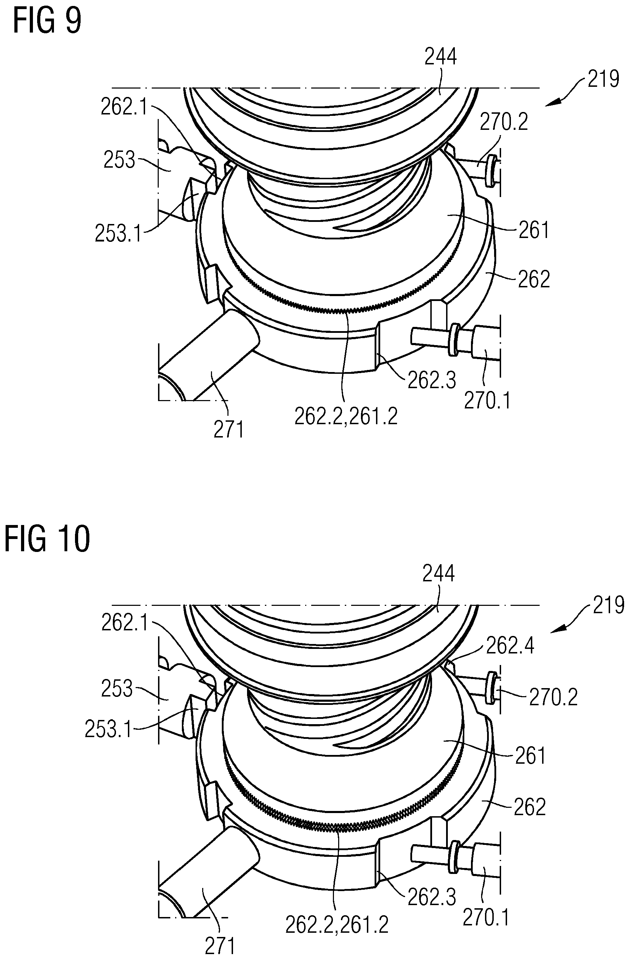

Fig. 9 zeigt den nächsten Zwischenzustand, bei dem die Bremskraft bis zur Blockierung durch das Sperrrad 262 aufgebaut ist. Der Bremskolben 244 bewegte sich also weiter infolge weiterer Bremsdruckerhöhung, bis das Sperrrad 262 auf den zweiten Anschlag 270.2 aufschlägt. Die Kraft auf die Bremsbeläge erhöhte sich linear entsprechend der Federsteifigkeit der Bremszangenanordnung.

Fig. 10 zeigt den nächsten Zwischenzustand, bei dem die Bremskraft F_{B} bis zum Abheben der Stirnverzahnung 261.2 von der Stirnverzahnung 262.2 aufgebaut ist. Der Bremszylinderdruck Cp_{B} wurde weiter erhöht, was zur Folge hatte, dass der Bremskolben 244 - entsprechend der Bremszangensteifigkeit - weiter ausgefahren ist. Das Sperrrad 262 und die Gewindespindel 261 konnten sich jedoch nicht mehr weiter drehen. Als Folge zieht der Bremskolben 244 an der Gewindespindel 261, sodass die Kraft der Vorspannfeder 272 überwunden wird. Die Stirnverzahnung 261.2 beginnt sich von der Stirnverzahnung 262.2 zu trennen. Im direkten Vergleich von Fig. 9 mit Fig. 10 ist erkennbar, dass die Gewindespindel 261 sich vom Sperrrad 262 getrennt hat, wenn auch nur wenig (wegen der hohen Zähnezahl der Stirnverzahnungen (261.2, 262.2). Der Trennvorgang ist eine Bewegung, die aus der Kombination einer axialen Bewegung und einer Rotation der Gewindespindel resultiert.

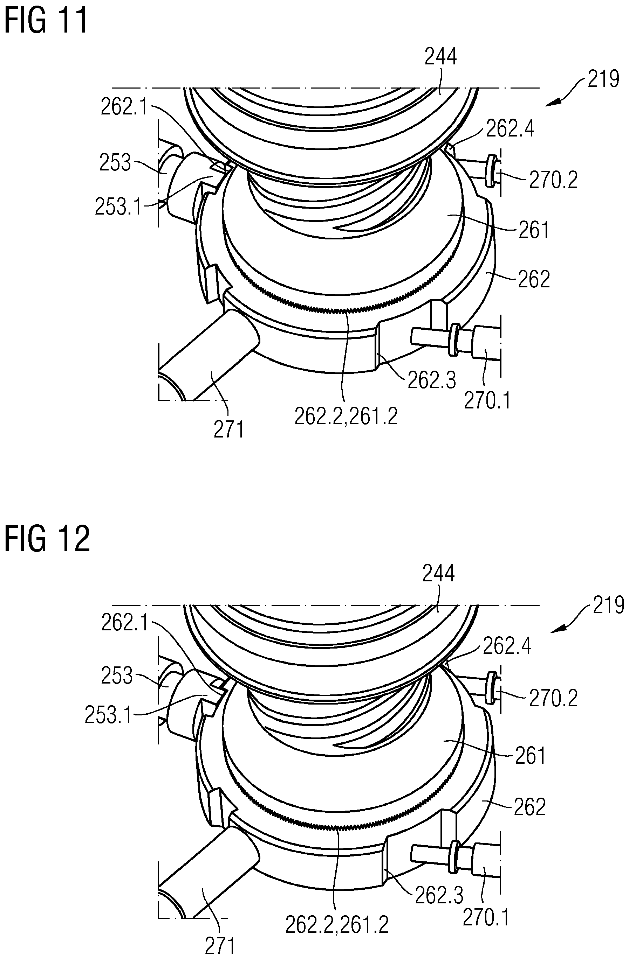

Fig. 11 zeigt den nächsten Zwischenzustand, bei dem die Bremskraft F_{B} soweit aufgebaut ist, dass die Stirnverzahnung 261.2 gegenüber der Stirnverzahnung 262.2 weitergerastet ist und bei dem anschließend die Arretierungsklinke 253.1 des Sperrkolbens 253 in die Sperrnut 262.5 des Sperrrades 262 eingefallen ist. Der Bremszylinderdruck Cp_{B} wurde also weiter erhöht. Die Gewindespindel 261 erfuhr weiterhin die Überlagerung von axialem Abheben und Drehung, solange bis sich die Zahnspitzen der Stirnverzahnungen 261.2, 262.2 gegenüberstanden. Im darauf folgenden Augenblick sprang die Stirnverzahnung 261.2 schlagartig in die nächste Zahnteilung der Stirnverzahnung 262.2 und befindet sich wieder im Eingriff mit der Stirnverzahnung 262.2, d.h. ist weitergerastet. Der vollständige Eingriff in der nächsten Zahnteilung wurde geometrisch möglich, da das Sperrrad 262 durch den Eingriffsvorgang geringfügig zurückbewegt wurde (vom zweiten Anschlag 270.2 abhob). Dieser Vorgang des Weiterrastens der Stirnverzahnungen erfolgt nur, wenn der Bremskolben 244 infolge Bremsbelag- und Scheibenverschleiß ausreichend weit ausfahren kann. Ist dieser Verschleißzustand noch nicht erreicht, fährt die Stirnverzahnung 261.2 beim Lösen der Bremseinheit wieder in den ursprünglichen Eingriff mit der Stirnverzahnung 262.2 zurück. Anschließend wurde das hydraulische Zurückhalten des Sperrkolbens 253 aufgehoben und er ist mittels einer Federkraft in die Sperrnut 262.1 des Sperrrades 262 eingefallen.

Fig. 12 zeigt den Zielzustand bei der Parkbremsung, bei dem die Arretierungsmittel 158 - also die mechanische Parkbremsarretierung - aktiv ist. Der Bremszylinderdruck Cp_{B} wurde also abgebaut, der Bremskolben 244 bewegte sich zurück, solange bis seine Zurückbewegung vom Sperrbolzen 253 blockiert wurde.

Die erfindungsgemäße Bremseinheit bietet insbesondere folgende Vorteile:
Die Bremseinheit weist keine externen hydraulischen Schnittstellen und damit keine hydraulischen Leitungs-, Rohr- oder Schlauchverbindungen zum Fahrzeug auf. Die Bremseinheit weist als externe Schnittstellen zum Fahrzeug oder zur Bremssteuerung lediglich Schnittstellen auf, die der Spannungsversorgung oder der Übertragung von Signalen dienen. Die integrierte hydraulische Schaltung ermöglicht damit in kompakter Bauweise über die Bereitstellung der geregelten Bremskraft F_{B} aktiv geregelte Betriebsbremsungen, Notbremsungen oder Schnellbremsungen, eine hydraulisch und/oder mechanisch betätigte und arretierbare Parkbremsfunktion sowie über die Bereitstellung der passiven Notbremskraft F_{N} passive Notbremsungen.

Die Einstellung und Verschleißnachstellung des Lüftspiels L ist insbesondere konstruktiv einfach verwirklicht und die bewegten Teile befinden sich dabei im Hydraulikmedium wodurch die Gefahr von Klemmen und der Verschleiß der bewegten Teile gemindert werden.

Über einen Abstandssensor 171 und/oder den Schalter 271 wird eine gelöste Bremseinheit sicher erkannt. Zusätzlich ist mittels der Sensoreinrichtung 31 das Erkennen einer festsitzenden Bremse möglich.

Mittels der erfindungsgemäßen Bremseinheiten 9; 109; 209 kann ein verzögerungsgeregeltes Bremssystem 8 realisiert werden, welches im Betrieb zusätzlich Bremswegsicherheit bietet.

Über eine Parametrierung von Bremskennwerten der erfindungsgemäßen Bremseinheit lässt sich die erfindungsgemäße Bremseinheit projektspezifisch auf einfache Weise anpassen, so dass ein Höchstmaß an Standardisierung mit dieser Bremseinheit erreicht werden kann.

## Patentansprüche

1. Bremseinheit (9; 109; 209) für ein Fahrzeug, insbesondere eine Schienenfahrzeug (1), mit einem Bremszylinder(143; 243), einem in dem Bremszylinder axial geführten Bremskolben (144; 244) und Mitteln (159; 259) zum Einstellen eines Lüftspiels (L), die zwei einander zugeordnete erste Anschläge (144.1, 163.1; 270.1, 262.3) bilden, die beim Öffnen der Bremseinheit aneinander anschlagen, wobei einer der ersten Anschläge (163.1; 262.3) an einem mit dem Bremskolben wirkverbundenen Sperrelement (163; 262) ausgebildet ist,
**dadurch gekennzeichnet, dass**
ein Sperrglied (165; 261) unter der Kraft einer Vorspannfeder (164; 273) derart mit dem Sperrelement (163; 262) in Eingriff steht, dass das Sperrelement (163; 262) beim Anschlagen der ersten Anschläge (144.1, 163.1; 270.1, 262.3) durch das Sperrglied blockiert ist, wobei Betätigungsmittel (155; 275, 276, 277) geeignet ausgebildet sind, das in Eingriff mit dem Sperrelement (163; 262) stehende Sperrglied (165; 261) entgegen der Kraft der Vorspannfeder (164; 273) in eine von dem Sperrelement gelöste Stellung zu verschieben.

2. Bremseinheit (9; 109; 209) nach Anspruch 1,
**dadurch gekennzeichnet, dass**
die Betätigungsmittel (155; 275, 276, 277) mechanisch sind.

3. Bremseinheit (109) nach einem der Ansprüche 1 oder 2,
**dadurch gekennzeichnet, dass**
das Sperrelement (163) ein Sperrschieber ist, der einen am Bremskolben (144) ausgebildeten Mitnehmer übergreift, und das Sperrglied (165) eine Sperrklinke ist, die unter der Kraft der Vorspannfeder (164) in eine Verzahnung (163.3) des Sperrschiebers eingreift.

4. Bremseinheit (209) nach einem der Ansprüche 1 oder 2,
**dadurch gekennzeichnet, dass**
das Sperrelement (262) ein Sperrrad ist und das Sperrglied (261) eine Gewindespindel ist, die über einen Gewindetrieb mit dem Bremskolben (244) gekoppelt und über ein Lager (274.1) am Bremszylinder (243) abgestützt ist.

5. Bremseinheit (209) nach Anspruch 4,
**dadurch gekennzeichnet, dass**
das die Gewindespindel (261) eine konzentrisch in den Bremskolben (244) eingeschraubte nichtselbsthemmende Gewindespindel ist.

6. Bremseinheit (209) nach einem der Ansprüche 4 oder 5,
**dadurch gekennzeichnet, dass** Betätigungsmittel einen Zuganker (275), eine Zugankerschraube (276) sowie einen durch Drehen der Zugankerschraube über eine Führung im Zuganker axial verschiebbaren Stift (277) aufweisen, wobei die Vorspannfeder (273) am Zuganker (275) abgestützt ist und wobei die Gewindespindel (261) in die Bewegungsbahn des Stiftes (277) ragende Betätigungsflächen (261.2) bildet, die derart ausgebildet sind, dass die Gewindespindel (261) beim Verschieben des Stiftes (277) entgegen der Kraft der Vorspannfeder (273) in die vom Sperrelement (262) gelöste Stellung verschoben wird.

7. Bremseinheit (9; 109; 209) nach einem der Ansprüche 1 bis 6,
**dadurch gekennzeichnet, dass**
das Sperrelement (163; 262) und das Sperrglied (165; 261) für den Eingriff einander zugeordnete Verzahnungen (163.3, 165; 262.2, 261.2) aufweisen.

8. Bremseinheit (209) nach einem der Ansprüche 1 bis 7,
**dadurch gekennzeichnet, dass**
eine Arretierungsklinke (253.1) geeignet ausgebildet ist, das Sperrelement bei geschlossener Stellung der Bremseinheit zu blockieren.

9. Bremseinheit (9; 109; 209) nach einem der Ansprüche 1 bis 8,
**dadurch gekennzeichnet, dass**
die Mittel (159; 259) zum Einstellen des Lüftspiels (L) zwei einander zugeordnete zweite Anschläge (144.2, 163.2; 270.2, 262.4) bilden, die beim Schließen der Bremseinheit aneinander anschlagen, wobei einer der zweiten Anschläge (163.2; 262.4) an dem Sperrelement (163; 262) ausgebildet ist, mit dem unter der Kraft der Vorspannfeder (164; 273) das Sperrglied (165; 261) derart in Eingriff steht, dass das Sperrelement beim Anschlagen der zweiten Anschläge gegenüber dem Sperrglied unter der Kraft des Bremskolbens weiter rasten oder weiter rutschen kann

10. Fahrzeug, insbesondere Schienenfahrzeug (1),
mit einem Fahrwerk (3), an dem eine Bremseinheit zum Reibschluss mit Bremsmitteln eines Radsatzes (4) des Fahrwerks befestigt ist,
**dadurch gekennzeichnet, dass**
die Bremseinheit (9; 109; 209) nach einem der Ansprüche 1 bis 9 ausgebildet ist.

## Claims

1. Brake unit (9; 109; 209) for a vehicle, in particular a rail vehicle (1), having a brake cylinder (143; 243), a brake piston (144; 244) which is axially guided in the brake cylinder, and means (159; 259) for adjusting a clearance (L), said means comprising two first stops (144.1, 163.1; 270.1, 262.3) that are assigned to each other and come to rest against each other when the brake unit is opened, wherein one of the first stops (163.1; 262.3) is formed on a locking element (163; 262) which is actively connected to the brake piston,
**characterised in that**
a locking member (165; 261) is engaged with the locking element (163; 262) under the force of a preloaded spring (164; 273) such that the locking element (163; 262) is blocked by the locking member when the first stops (144.1, 163.1; 270.1, 262.3) come to rest against each other, wherein actuation means (155; 275, 276, 277) are suitably formed to displace the locking member (165; 261) that is engaged with the locking element (163; 262), against the force of the preloaded spring (164; 273), into a position released from the locking element.

2. Brake unit (9; 109; 209) according to claim 1,
**characterised in that**
the actuation means (155; 275, 276, 277) are mechanical.

3. Brake unit (109) according to one of claims 1 or 2,
**characterised in that**
the locking element (163) is a locking slide which overlaps a carrier that is formed on the brake piston (144), and the locking member (165) is a locking pawl which engages into teeth (163.3) of the locking slide under the force of the preloaded spring (164).

4. Brake unit (209) according to one of claims 1 or 2,
**characterised in that**
the locking element (262) is a locking wheel and the locking member (261) is a threaded spindle, which is coupled to the brake piston (244) via a screw-thread drive and supported at the brake cylinder (243) via a bearing (274.1).

5. Brake unit (209) according to claim 4,
**characterised in that**
the threaded spindle (261) is a non-self-locking threaded spindle which is concentrically screwed into the brake piston (244).

6. Brake unit (209) according to one of claims 4 or 5,
**characterised in that**
the actuation means comprise a tie rod (275), a tie rod screw (276), and a pin (277) which can be axially displaced by rotating the tie rod screw via a guide in the tie rod, wherein the preloaded spring (273) is supported at the tie rod (275) and wherein the threaded spindle (261) comprises actuation surfaces (261.2) which project into the path of movement of the pin (277), said actuation surfaces (261.2) being so formed that the threaded spindle (261) is displaced into the position released from the locking element (262) when the pin (277) is displaced against the force of the preloaded spring (273).

7. Brake unit (9; 109; 209) according to one of claims 1 to 6,
**characterised in that**
the locking element (163; 262) and the locking member (165; 261) have reciprocal teeth (163.3, 165; 262.2, 261.2) for the purpose of engagement.

8. Brake unit (209) according to one of claims 1 to 7,
**characterised in that**
an arresting pawl (253.1) is suitably formed to block the locking element when the brake unit is in a closed position.

9. Brake unit (9; 109; 209) according to one of claims 1 to 8,
**characterised in that**
the means (159; 259) for adjusting the clearance (L) comprise two second stops (144.2, 163.2; 270.2, 262.4) that are assigned to each other and come to rest against each other when the brake unit is closed, wherein one of the second stops (163.2; 262.4) is formed on the locking element (163; 262) into which the locking member (165; 261) engages, under the force of the preloaded spring (164; 273), in such a way that the locking element can continue to catch or slip relative to the locking member under the force of the brake piston when the second stops come to rest against each other.

10. Vehicle, in particular rail vehicle (1),
having a chassis (3) to which a brake unit is attached for the purpose of frictional engagement using braking means of a wheelset (4) of the chassis,
**characterised in that**
the brake unit (9; 109; 209) is formed according to one of claims 1 to 9.

## Revendications

1. Dispositif (9 ; 109 ; 209) de freinage d'un véhicule, notamment d'un véhicule (1) ferroviaire, comprenant un cylindre (143 ; 243) de frein, un piston (144, 244) de frein, guidé axialement dans le cylindre de frein, et des moyens (159 ; 259) de réglage d'un jeu (L) de desserrage, qui forme deux premières butées (144.1, 163.1 ; 270.1, 262.3) associées l'une à l'autre, qui, à l'ouverture du dispositif de freinage, buttent l'une contre l'autre, l'une des premières butées (163.1 ; 262.3) étant constituée sur un élément (163 ; 262) d'arrêt relié opérationnellement au piston de frein,
**caractérisé en ce que**
un organe (165; 261) d'arrêt est, sous la force d'un ressort (164; 273) de précontrainte, en prise avec l'élément (163; 262) d'arrêt, de manière à ce que l'élément (163 ; 262) d'arrêt soit, lorsque les premières butées (144.1, 163.1 ; 270.1, 262.3) viennent en butée, bloqué par l'organe d'arrêt, des moyens (155 ; 275, 276, 277) d'actionnement étant constitués de manière appropriée pour faire venir, à l'encontre de la force du ressort (164 ; 273) de précontrainte, dans une position desserrée par l'élément d'arrêt, l'organe (165 ; 261) d'arrêt en prise avec l'élément (163 ; 262) d'arrêt.

2. Dispositif (9 ; 109 ; 209) de freinage suivant la revendication 1,
**caractérisé en ce que**
les moyens (155 ; 275, 276, 277) d'actionnement sont mécaniques.

3. Dispositif (109) de freinage suivant l'une des revendications 1 ou 2,
**caractérisé en ce que**
l'élément (163) d'arrêt est un tiroir d'arrêt, qui empiète sur un entraîneur constitué sur le piston (144) de frein et l'organe (165) d'arrêt est un cliquet d'arrêt, qui pénètre sous la force du ressort (164) de précontrainte dans une denture (163.3) du tiroir d'arrêt.

4. Dispositif (209) de freinage suivant l'une des revendications 1 ou 2,
**caractérisé en ce que**
l'élément (262) d'arrêt est une roue d'arrêt et l'organe (261) d'arrêt est une broche filetée, qui, par une transmission filetée, est accouplé au piston (244) de frein et, par un palier (274.1), est supporté sur le cylindre (243) de frein.

5. Dispositif (209) de freinage suivant la revendication 4,
**caractérisé en ce que**
la broche (261) filetée est une broche filetée ne se bloquant pas automatiquement et vissée concentriquement dans le piston (244) de frein.

6. Dispositif (209) de freinage suivant l'une des revendications 4 ou 5,
**caractérisé en ce que**
des moyens d'actionnement ont un tirant (275), une vis (276) de tirant ainsi qu'une goupille (277) pouvant coulisser axialement dans le tirant par un guidage, en vissant la vis de tirant, le ressort (273) de précontrainte étant appuyé sur le tirant (275) et la broche (261) filetée formant des surfaces (261.2) d'actionnement pénétrant dans la voie de déplacement de la goupille (277) et constituée de manière à ce que la broche (261) filetée soit, lors du coulissement de la goupille (277) à l'encontre de la force du ressort (273) de précontrainte, mise dans la position desserrée par l'élément (262) d'arrêt.

7. Dispositif (9 ; 109 ; 209) de freinage suivant l'une des revendications 1 à 6,
**caractérisé en ce que**
l'élément (163 ; 262) d'arrêt et l'organe (165 ; 261) d'arrêt ont des dentures (163.3, 165 ; 262.2, 261.2) associées l'une à l'autre pour la prise.

8. Dispositif (209) de freinage suivant l'une des revendications 1 à 7,
**caractérisé en ce qu'**
un cliquet (253.1) d'arrêt est constitué de manière appropriée pour bloquer l'élément d'arrêt en la position fermée du dispositif de freinage.

9. Dispositif (9 ; 109 ; 209) de freinage suivant l'une des revendications 1 à 8,
**caractérisé en ce que**
les moyens (159 ; 259) de réglage du jeu (L) de desserrage forment deux deuxièmes butées (144.2, 163.2 ; 270.2, 262.4) associées l'une à l'autre, qui butent l'une contre l'autre à la fermeture du dispositif de freinage, l'une des deuxièmes butées (163.2 ; 262.4) étant constituée sur l'élément (163 ; 262) d'arrêt et venant en prise avec l'organe (165 ; 261) d'arrêt sous la force du ressort (164 ; 273) de précontrainte, de manière à ce que l'élément d'arrêt puisse, lors de la butée des deuxièmes butées sur l'organe d'arrêt, s'encliqueter davantage ou glisser davantage, sous la force du piston de frein.

10. Véhicule, notamment véhicule (1) ferroviaire comprenant un train de roulement (3) sur lequel est fixé un dispositif de freinage pour la coopération à frottement avec des moyens de freinage d'un essieu (4) du train de roulement,
**caractérisé en ce que**
le dispositif (9 ; 109 ; 209) de freinage est constitué suivant l'une des revendications 1 à 9.
